# EUROPEAN PATENT APPLICATION

(11) **EP 4 838 726 A1**
(43) Date of publication of application: **11.11.2026**
(21) Application number: 25174733.3
(22) Date of filing: 07.05.2025
(51) Int. Cl.: H02G 3/08

(54) **ELECTRICAL INSTALLATION ACCESSORY**

(71) Applicant: ABB Schweiz AG, 5400 Baden (CH)
(72) Inventor: Särkelä, Aleksanteri, 65320 Vaasa (FI); Elomaa, Jari, 65320 Vaasa (FI)
(74) Representative: Kolster Oy Ab

(57) **Abstract**

An electrical installation accessory (10) comprising a body part (11, 12) comprising at least one hole (20) configured to enable an electric line to pass therethrough, and a strain relief assembly (50) in the at least one hole, the strain relief assembly comprising a first set of projections (31a) configured to engage to the electric line upon the electric line entering through the hole in a first direction and after engaging to resist a movement of the electric line in a second direction opposite to the first direction, a second set of projections (31b) configured to bend upon the electric line entering through the hole, and sealing means (40) arranged between the first set of projections and the second set of projections, wherein the second set of projections is configured to press the sealing means against the electric line after bending upon the electric line entering through the hole.

## Description

### TECHNICAL FIELD

The present invention relates to an electrical installation accessory.

### BACKGROUND

In installation of electric lines, such as cables, strain reliefs may be used to resist a strain caused by the weight of an electric line or another force applied thereto from being further applied to a connection of the electric line, for example. As an example, in pipeless installation of electric lines, when inserting an electric line e.g. into an enclosure, such as an electrical box, an electric line entering the box may be provided with a strain relief. Such enclosures used for electrical installation may comprise one or more knockouts or holes for different kinds of electric line entries, for example. Such knockouts or holes may be provided with a screwable strain relief for each such electric line entry, for instance.

Alternatively, such knockouts or holes may be provided with a sealing gland or membrane. Then, a possible strain in the electric line that may cause the electric line to push or pull the sealing gland or membrane to the direction of the tension which may cause a gap between the electric line and the sealing gland or membrane. To prevent the sealing from failing, a separate strain relief or support may be arranged inside or outside of the enclosure which can resist the electric line from moving after installation thereof.

A problem related to such a solution is that the resulting sealing might not meet the requirements for the sealing.

### BRIEF DESCRIPTION

An object of the present invention is thus to provide a method and an apparatus for implementing the method so as to overcome the above problems or at least to alleviate the problem. The objects of the invention are achieved by an electrical installation accessory which is characterized by what is stated in the independent claim. The preferred embodiments of the invention are disclosed in the dependent claims.

The invention is based on the idea that a strain relief assembly comprises a first set of projections extending from an edge of the hole towards an inside of the hole and configured to engage to the electric line upon the electric line entering through the hole in a first direction and after engaging to resist a movement of the electric line in a second direction opposite to the first direction, a second set of projections extending from the edge of the hole towards the inside of the hole and configured to bend upon the electric line entering through the hole; and sealing means. Moreover, the sealing means are arranged between the first set of projections and the second set of projections in an axial direction of the hole and the second set of projections is configured to press the sealing means against the electric line after bending upon the electric line entering through the hole.

An advantage of the solution of the invention is that the sealing of the electric line can be made more reliable. Moreover, the solution of the invention can make the installation of electric lines simpler.

### BRIEF DESCRIPTION OF THE DRAWINGS

In the following the invention will be described in greater detail by means of preferred embodiments with reference to the accompanying drawings, in which
Figure 1 shows an example of an electrical installation accessory according to an embodiment;
Figure 2 shows an example of an electrical installation accessory according to an embodiment;
Figure 3 shows an example of an electrical installation accessory according to an embodiment;
Figure 4 shows an example of a strain relief assembly according to an embodiment;
Figure 5 shows an example of a strain relief assembly according to an embodiment;
Figure 6 shows an example of an electrical installation accessory according to an embodiment; and
Figure 7 shows an example of an electrical installation accessory according to an embodiment.

### DETAILED DESCRIPTION

The following embodiments are exemplary. Embodiments described herein may be implemented in various manners other than the ones described below. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. When a particular feature, structure, or characteristic is described in connection with an embodiment, it is submitted that it is within the knowledge of one skilled in the art to affect such feature, structure, or characteristic in connection with other embodiments whether or not explicitly described.

Furthermore, terms such as "comprises", "comprising", "has", "having", "includes" and/or "including" should be understood as not limiting the described embodiment(s) to consist of only those features, elements, components and/or combinations thereof that have been mentioned, and such embodiment(s) may also contain features, elements, components and/or combinations thereof that have not been specifically mentioned. Moreover, terms such as "connected" and "coupled", are used to mean connected or coupled directly or indirectly (i.e. via one or more elements).

Reference numbers, in the description and/or in the claims, serve to illustrate the embodiments with reference to the drawings, without limiting the embodiments to these examples only. Generally, all terms and expressions used should be interpreted broadly and they are intended to illustrate, not to restrict, the embodiments. The figures only show components necessary for understanding the various embodiments. The number, shape and/or configuration of the various elements, and generally their implementation, could vary from the examples shown in the figures.

Moreover, it should be understood that although terms such as "first," "second" and the like may be used herein to describe various elements, these elements should not be limited by these terms. Such terms are only used to distinguish one element from another. For example, a first element could be termed a second element, and similarly, a second element could be termed a first element, without departing from the scope of example embodiments. As used herein, expression "and/or" includes any and all combinations of one or more of the listed terms. Different embodiments and examples may be described below using single units, models, and equipment, for example, without restricting the embodiments/examples to such a solution. All words and expressions should be interpreted broadly, and they are intended to illustrate, not to restrict, the embodiment in question. The application of the embodiments described herein is generally not, unless otherwise stated, restricted to any specific system, but they may be applied in various electric systems, for example.

According to an embodiment, an electrical installation accessory comprises a body part, wherein the body part comprises at least one hole provided therein, wherein the hole is configured to enable an electric line to pass therethrough, and a strain relief assembly in the at least one hole. The at least one hole may be configured to enable an electric line of a predetermined diameter, or diameter range, to pass therethrough, for example. The at least one hole may be a through-hole, i.e. a hole, which extends through the body part. According to an embodiment, the strain relief assembly comprises a first set of projections extending from an edge of the hole towards an inside of the hole and configured to engage to the electric line upon the electric line entering through the hole in a first direction and after engaging to resist a movement of the electric line in a second direction opposite to the first direction. According to an embodiment, the strain relief assembly further comprises a second set of projections extending from the edge of the hole towards the inside of the hole and configured to bend upon the electric line entering through the hole. According to an embodiment, the strain relief assembly further comprises sealing means arranged between the first set of projections and the second set of projections in an axial direction of the hole. According to an embodiment, the second set of projections is configured to press the sealing means against the electric line after bending upon the electric line entering through the hole.

According to an embodiment, the first set of projections may be configured to bend upon engaging to the electric line upon the electric line entering through the hole. According to an embodiment, the second set of projections may be configured to engage to the electric line upon the electric line entering through the hole in the first direction and after engaging to resist the movement of the electric line in the second direction opposite to the first direction.

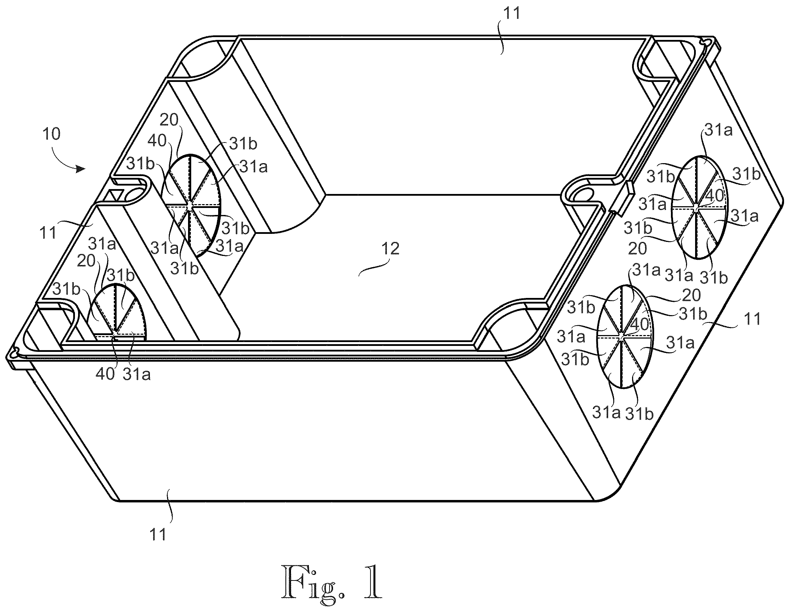

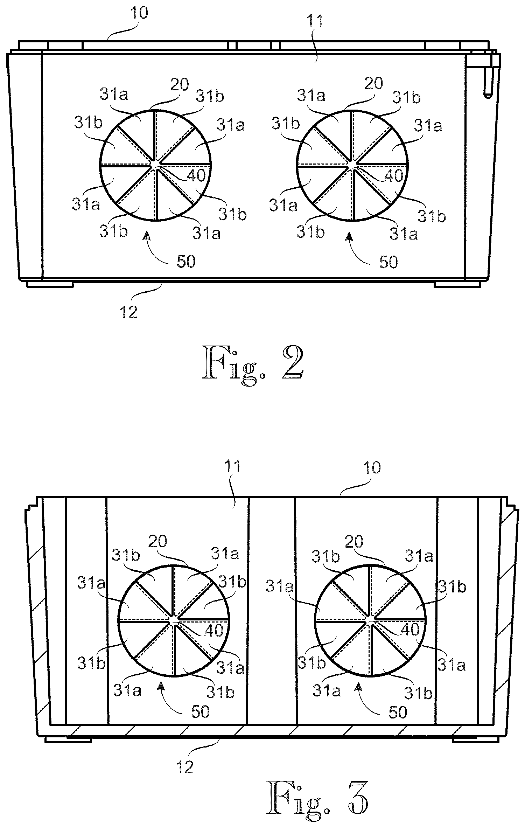

Figure 1 shows an example of an electrical installation accessory according to an embodiment. Term electrical (electric) installation accessory should be understood broadly to refer to any accessory (product, equipment, article, item) which may be used and/or which is suitable for using in electrical installation, such as installation of an electric line or lines, for example. In the example shown in Figure 1, the example electrical installation accessory is, or comprises at least, an enclosure 10 for electrical installation. Figure 2 is a side view of the example enclosure 10 and Figure 3 is a cross-section view of the example enclosure 10.

The example enclosure 10 may comprise a base part 12, such as a bottom. Moreover, the enclosure 10 comprises a wall part 11 extending from the base part 12. In the example of Figure 1, the body part of the electrical installation accessory may thus comprise at least the wall part 11 and may also comprise the possible base part 12, for example. In the example of Figure 1, the wall part 11 comprises four sides and the wall part has an essentially rectangular shape. However, the wall part 11 could alternatively have an essentially circular shape or the wall part 11 could have another number of sides, e.g. eight sides and an octagonal shape, for example. Also the shape of the sides of the wall part 11 could vary from the illustrated example. The wall part 11 is integral with the base part 12. In other words, the wall part 11 and the base part 12 may be integrally formed as one piece. The wall part 11 and the base part 12 may define an interior space of the enclosure 10. The enclosure may further comprise, or be configured to receive, a cover part (not shown in the figures) with which the interior space of the enclosure 10 can be closed e.g. in a sealed or non-sealed manner. Such a cover part could be connectable to the wall part 11 and the base part 12 in a removable manner, for example, by means of suitable fixing means, such as screw(s), clamp(s), and/or hinge(s). According to an embodiment, the enclosure 10 may be configured to be used as an electrical box. As an example, the electrical box may be a mounting box, an outlet box, a junction box, a tapping box and/or any other type of electrical box which is intended for and/or suitable to be used in electrical installation, for example. Additionally or alternatively, the enclosure 10 may be configured to house one or more switches, fuses and/or other electric devices and/or components, for example. Examples of switches may include safety switches, disconnectors, switch disconnectors, relays and circuit breakers, for instance.

In the example of Figure 1, the body part of the electrical installation accessory comprising at least the wall part 11 comprises at least one hole 20 provided therein. The at least one hole 20 may be a through-hole, i.e. a hole, which extends through the wall part 11. In the example of Figure 1, there are four holes 20 provided but the number of the holes 20 could be any number, such as 1, 2, 3, 4, 5, 6, 7, 8 or more, for instance. Moreover, the location of the one or more holes 20 in the wall part 11 could vary. The shape of the at least one hole 20 may be essentially circular or the at least one hole 20 may have another shape. The diameter of the at least one hole 20 may be suitably selected such that it enables an electric line (not shown in the figures), such as a cable or another kind of electric line, to enter the enclosure 10 via the hole 20. When more than one holes 20 are provided in the wall part 11, such multiple holes 20 could have different diameters in order to enable electric lines of different diameters to enter the enclosure 10, for example. The diameter or diameters of the at least one such hole 20 could be selected e.g. from a range from >0 mm to 100 mm or more.

In the example of Figure 1, the body part of the electrical installation accessory comprising at least the wall part 11 comprises, in at least one of the at least one holes 20 provided therein, a strain relief assembly 50. In the example of Figure 1, each strain relief assembly 50 may comprise a first set of (first) projections 31a extending from an edge of the hole 20 towards an inside of the hole 20 and configured to engage to the electric line upon the electric line entering through the hole 20 in a first direction and after engaging to resist a movement of the electric line in a second direction opposite to the first direction. The first direction could be a direction from an outside of the enclosure 10 towards an inside (interior space) of the enclosure 10, for example. Alternatively, the first direction could be a direction from the inside of the enclosure 10 towards the outside of the enclosure 10, for example. Thus, when the electric line is inserted through the hole 20, the first set of (first) projections 31a in the respective hole 20 may be configured to grip the electric line such that a movement of the electric line in a direction opposite to the direction of the insertion of the electric line is resisted by the first set of projections 31a. The first set of projections 31a may essentially prevent any movement of the electric line in the direction opposite to the direction of the insertion of the electric line.

In the example of Figure 1, each strain relief assembly 50 may further comprise a second set of (second) projections 31b extending from the edge of the hole 20 towards the inside of the hole and configured to bend upon the electric line entering through the hole 20. This may be implemented by using a suitable material and suitable thickness of the at least one projection 31b to enable the at least one projection 31b to bend upon the electric line (of at least a predetermined diameter) entering, e.g. being pushed, through the hole 20 and engaging the respective at least one projection 31b, for example. In the example of Figure 1, each strain relief assembly 50 may further comprise sealing means 40, wherein the sealing means 40 are arranged between the first set of projections 31a and the second set of projections 31b in an axial direction of the hole 20. In other words, the sealing means 40 are arranged, at least partially, between the first set of projections 31a and the second set of projections 31b in an axial direction of the hole 20, i.e. in a direction through the hole 20. The second set of projections 31b is configured to press the sealing means 40 against the electric line after bending (i.e. in their bent position) upon the electric line entering through the hole 20. While in the example of Figure 1, the first set of (first) projections 31a is positioned on the side of the outside of the enclosure 10 and the second set of (second) projections 31b is positioned on the side of the inside (interior space) of the enclosure 10 with respect to the sealing means 40 sandwiched therebetween, the positioning of the first set of (first) projections 31a and the second set of (second) projections 31b could be the opposite of that.

According to an embodiment, the first set of (first) projections 31a may (also) be configured to bend upon engaging to the electric line upon the electric line entering through the hole essentially similarly to the second set of (second) projections 31b described above. In other words, both the first set of projections 31a and also the second set of projections 31b may be configured to bend upon the electric line (of at least a predetermined diameter) entering through the hole 20 and via the first set of projections 31a and the second set of projections 31b. According to an embodiment, the second set of (second) projections 31b may (also) be configured to engage to the electric line upon the electric line entering through the hole 20 in the first direction and after engaging to resist the movement of the electric line in the second direction opposite to the first direction. In other words, both the first set of projections 31a and also the second set of projections 31b could be configured to function as strain relief means essentially independently of each other, for example.

According to an embodiment, the first set of projections 31a and the second set of projections 31b each comprise at least one projection 31a, 31b. Preferably, the first set of projections 31a and the second set of projections 31b may each comprise at least two projections 31a, 31b. The first set of projections 31a may be arranged (in their resting, i.e. unbent, position) in a first plane essentially perpendicular to the axial direction of the hole 20. The second set of projections 31b may be arranged (in their resting, i.e. unbent, position) in a second plane essentially perpendicular to the axial direction of the hole 20 such that the first and second planes are suitably spaced apart. According to an embodiment, the first set of projections 31a and/or the second set of projections 31b is integral with the body part of the electrical installation accessory. In the example of Figure 1, the body part of the electrical installation accessory comprises at least the wall part 11 and the first set of projections 31a and/or the second set of projections 31b may be integral with the wall part 11, for example. According to an embodiment, the at least one projection 31a of the first set of projections and/or at least one projection 31b of the second set of projections may extend from an edge (periphery) of the hole 20. The at least one projection 31a, 31b may extend from an inner peripheral surface of the hole 20, for example. According to an embodiment, the at least one projection 31a, 31b extends from the edge of the hole 20 towards an inside of the respective hole. The at least one projection 31a, 31b may extend from the edge of the hole 20 essentially towards a centre of the respective hole. According to an embodiment, the at least one projection 31a, 31b or at least some of them, could extend from the edge of the hole 20 directly or obliquely towards the inside of the respective hole. In other words, the at least one projection 31a, 31b or at least some of them, could be preconfigured in an inclined position, e.g. either inclined towards the inside of the enclosure 10 or inclined towards the outside of the enclosure 10 in the example configuration of Figures 1-3.

According to an embodiment, at least one projection of the first set of projections 31a and/or at least one projection of the second set of projections 31b may have a claw-like (tooth-like) shape. The examples shown e.g. in Figures 1 to 3 exhibit eight claw-like projections 31a in each first set of projections and eight claw-like projections 31b in each second set of projections, but the number of the projections may vary, depending on the diameter of the hole 20 and/or on the shape(s) of the projections 31a, 31b, for instance. The number of the projections 31a, 31b arranged in one set of projections in one strain relief assembly 50 could be any number, such as 1, 2, 3, 4, 5, 6, 7, 8, 9, 10 or more, for instance. Moreover, the projections 31a, 31b of the strain relief assembly 50 could be spaced differently than shown in the examples. As an example, the space (gap) between two adjacent projections of the first set of projections 31a and/or of the second set of projections 31b could be larger or smaller. The projections 31a, 31b may also have shapes different from those shown in the figures. The projections 31a, 31b of the strain relief assembly 50 could be mutually of the same length as shown e.g. in the examples of Figures 1 to 3. Alternatively, the projections 31a, 31b of the strain relief assembly 50 could be mutually of different (varying) length in which case they may be more adaptive for engaging (gripping) electric lines of different diameters, for example. According to an embodiment, the projections 31a of the first set of projections could be shorter than the projections 31b of the second set of projections, or vice versa, for instance.

According to an embodiment, an end (tip) of the projections 31a of the first set of projections may be bevelled and/or pointed or otherwise made sharp in order for them to better engage with an outer surface of the electric line. According to an embodiment, an end (tip) of the projections 31b of the second set of projections could be similarly bevelled and/or pointed or otherwise made sharp in order for them to better engage with an outer surface of the electric line, e.g. in case also the second set of projections 31b is intended to function as strain relief means.

According to an embodiment, the body part of the electrical installation accessory, which e.g. in the example of Figure 1 may comprise at least the wall part 11 and optionally the base part 12, and the first set of projections 31a and/or of the second set of projections 31b may be formed e.g. of plastic or metal material or a combination thereof, such as metal material coated with plastic material. According to an embodiment, the body part of the electrical installation accessory and the first set of projections 31a and/or of the second set of projections 31b may be integrally formed. Thus, e.g. in the example of Figure 1, the first set of projections 31a and/or of the second set of projections 31b may be an integral part of the wall part 11. It is also possible to form the first set of projections 31a and/or of the second set of projections 31b separately from the body part of the electrical installation accessory and attach them together by means of suitable attachment means or method such as adhesive and/or mechanical fastening, for example. Suitable plastic materials may include various polymers, such as thermoplastic polymers, for example. Some examples include e.g. polyamide and polycarbonate, for instance. An advantage of a plastic material may be its electrical insulation capacity, for instance.

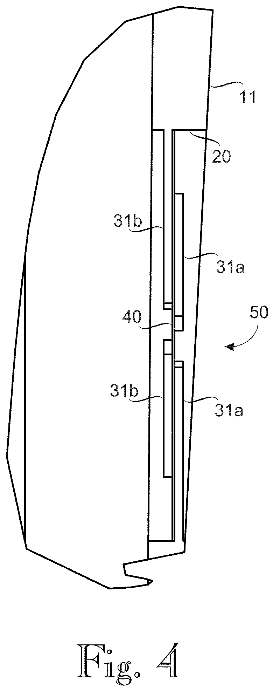

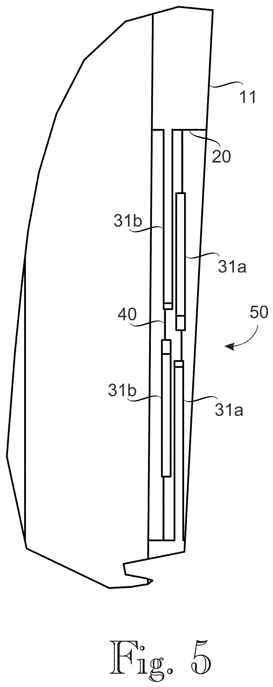

According to an embodiment, the sealing means 40 may be connected to the first set of projections 31a and/or of the second set of projections 31b. According to an embodiment, the sealing means comprise at least one membrane 40. The at least one membrane 40 may be configured to close the at least one hole 20 in a sealing manner. It is possible that the at least one membrane 40 closes the at least one hole 20 in a sealing manner already before an electric line enters through the hole 20 and also after the electric line enters through the hole 20, for example. It is also possible that the at least one membrane 40 comprises an opening, such as a preformed opening, for the electric line such that the at least one membrane 40 closes the at least one hole 20 in a sealing manner only after the electric line enters through such opening of the at least one membrane 40, for example. The at least one membrane 40 may be connected to the first set of projections 31a and/or of the second set of projections 31b. The at least one membrane 40 may be suitably attached to the edge of the respective hole 20 in order to seal the hole in question, for example. As shown in Figures 1 and 3 and in more detail in Figures 4 and 5, the hole 20 may be closed by a membrane 40 connected to the first set of projections 31a and to the second set of projections 31b of the strain relief assembly 50. As shown in the example of Figure 4, the membrane 40 may be at least touching a side of the at least one projection 31a of the first set of projections and the at least one projection 31b of the second set of projections. The membrane 40 could be attached to the side of the at least one projection 31a, 31b of the strain relief assembly 50. According to an embodiment, the at least one membrane 40 may at least partially surround the at least one projection 31a of the first set of projections and/or the at least one projection 31b of the second set of projections. As shown in the example of Figure 5, the membrane 40 may extend at least partially between the projections 31a, 31b of the strain relief assembly 50. The at least one membrane 40 may be located (in its initial position, i.e. when not engaged with an electric line therethrough), at least partially, on a third plane essentially perpendicular to the axial direction of the hole 20 between the first plane of the first set of projections 31a and the second plane of the second set of projections 31b, for example. Moreover, the at least one membrane 40 could also extend to both sides of the at least one projection 31a of the first set of projections and/or the at least one projection 31b of the second set of projections. According to an embodiment, the at least one membrane 40 is configured to be penetrated by the electric line upon the electric line entering (being inserted) through the hole 20 and to engage the penetrating electric line in a sealing manner. In other words, the at least one membrane 40 may engage the penetrating electric line such that the hole 20 around the electric line stays or at least becomes sealed. The electric line could puncture (pierce) the at least one membrane 40 upon the electric line entering (being inserted) through the hole 20 and penetrating the at least one membrane 40. Alternatively, the at least one membrane 40 could have an (preformed) opening for the electric line, as described above, whereby the electric line entering through the hole 20 could penetrate (pass through) the at least one membrane 40 via such opening. Such possible preformed opening should preferably have a diameter equal to or smaller than a diameter of the electric line in order to be able to provide a proper sealing. The at least one membrane 40 could also be prepunctured, e.g. manually with a suitable tool, during installation of the electric line before the electric line is inserted through the hole 20, for instance, whereby the electric line entering through the hole 20 can penetrate the at least one membrane 40 via such a (pre)puncture. Thus, when the electric line is inserted through the hole 20 and consequently penetrates through the at least one membrane 40 covering the hole 20, the at least one membrane 40 can provide a seal around the electric line, i.e. the at least one membrane 40 can surround the penetrating electric line in the hole 20 and thus seal the hole 20. According to an embodiment, the at least one membrane 40 is made of a resilient material. Such resilient material may comprise e.g. rubber or plastic, such as a thermoplastic elastomer (TPE), for example. The thickness of the at least one membrane 40 may be suitably selected depending on e.g. the material of the at least one membrane and/or the diameter of the hole 20 to be sealed. The thickness may be essentially uniform or nonuniform, for example.

Consequently, when an electric line enters through the hole 20 and the strain relief assembly 50 therein from the side of the hole having the first set of (first) projections 31a, the first set of projections 31a may engage to the electric line upon the electric line entering through the hole 20 and after engaging to resist a movement of the electric line in a second direction opposite to the first direction. Moreover, the sealing means 40 may engage the electric line entering through the hole 20 and provide a seal around the electric line. And the second set of (second) projections 31b may suitably bend away from the electric line upon the electric line entering through the hole and upon bending (i.e. in their bent position) exert a pressing force against the sealing means 40, such as the membrane, thus pressing the sealing means against the electric line. Such pressing force may be essentially constant and the magnitude of such pressing force may be suitably predetermined by means of material selection and/or dimensioning of the second set of (second) projections 31b, for example. As a result, the sealing provided by the sealing means 40 can become more reliable as the pressure exerted by the second set of (second) projections 31b can help in keeping the sealing means 40 better in place against the electric line.

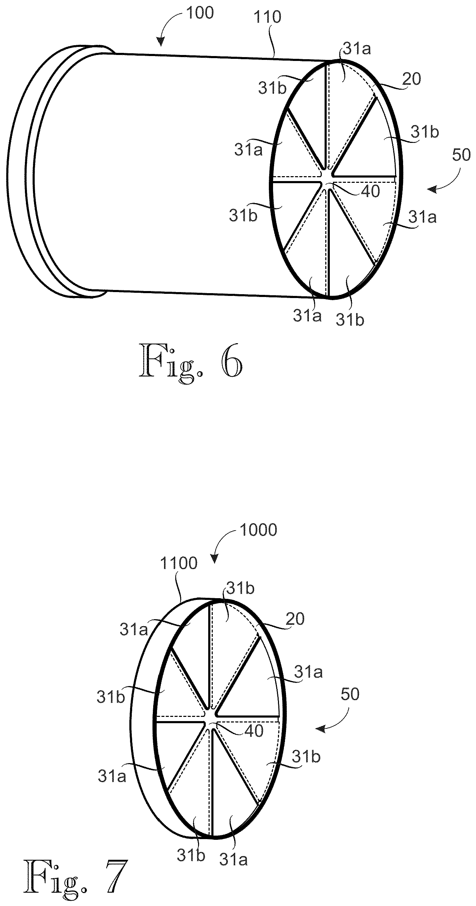

Figure 6 shows another example of an electrical installation accessory according to an embodiment. In the example of Figure 6, the electrical installation accessory is, or comprises at least, an element 100 which may have a tubular body 110 which may also form the body part of the electrical installation accessory. The strain relief assembly 50 is located inside the hole 20 of the tubular body 110 of the element 100. The strain relief assembly 50 in the example of Figure 6 may be implemented according to any embodiment described above. According to an embodiment, the body part may be configured to be connected to an electrical installation pipe connector of a predetermined size, for example. Such electrical installation pipe connector may be located in a stub or in a sleeve, such as an extension sleeve or a pipe adaptor, for example. Accordingly, the element 100 in the example of Figure 6 may be configured, e.g. suitably dimensioned, to be inserted into and be fastened to an electrical installation pipe connector, for example, to provide strain relief means therein.

Figure 7 shows yet another example of an electrical installation accessory according to an embodiment. In the example of Figure 7, the electrical installation accessory is, or comprises at least, an element 1000 having a circular body 1100 which may also form the body part of the electrical installation accessory. The strain relief assembly 50 is located inside the hole 20 of the tubular body 110 of the stub. The strain relief assembly 50 in the example of Figure 7 may be implemented according to any embodiment described above. The example electrical installation accessory element 1000 of Figure 7 could be configured, e.g. suitably dimensioned, to be inserted and attached to any opening, hole and/or pipe, for example, to provide strain relief means therein. Instead of having a tubular or generally circular shaped body part, the electrical installation accessory could alternatively have a body part of another shape.

Possible manufacturing methods of the electrical installation accessory 10, 100, 1000 include injection moulding and compression moulding, for example, but other methods are possible as well. The body part 11, 110, 1100 and at least some of the projections 31a, 31b of the strain relief assembly 50 therein may be manufactured as a single component by any such manufacturing method. Moreover, the sealing means, which may comprise at least one membrane 40 in one or more of the at least one holes 20, may be manufactured separately, e.g. by moulding, and attached to the body part 11, 110, 1100 to seal the respective hole 20 by any suitable means, such as adhesive. It is also possible to manufacture the electrical installation accessory 10, 100, 1000 and at least some of the projections 31a, 31b of the strain relief assembly 50 and also the sealing means 40 by multi-material injection moulding, for example. Examples of multi-material injection moulding include multi-component injection moulding (co-injection moulding), multi-shot injection moulding and over-moulding, for example. It is also possible to manufacture the electrical installation accessory 10, 100, 1000 and at least some of the projections 31a, 31b of the strain relief assembly 50, and optionally also the sealing means 40, by 3D printing (additive manufacturing) by any suitable 3D printing method known *per se,* for example.

It will be obvious to a person skilled in the art that, as the technology advances, the inventive concept can be implemented in various ways. The invention and its embodiments are not limited to the examples described above but may vary within the scope of the claims.

## Claims

1. An electrical installation accessory, the electrical installation accessory comprising a body part, wherein the body part comprises at least one hole provided therein, wherein the hole is configured to enable an electric line to pass therethrough, and a strain relief assembly in the at least one hole, the strain relief assembly comprising:
a first set of projections extending from an edge of the hole towards an inside of the hole and configured to engage to the electric line upon the electric line entering through the hole in a first direction and after engaging to resist a movement of the electric line in a second direction opposite to the first direction;
a second set of projections extending from the edge of the hole towards the inside of the hole and configured to bend upon the electric line entering through the hole; and
sealing means, wherein the sealing means are arranged between the first set of projections and the second set of projections in an axial direction of the hole,
wherein the second set of projections is configured to press the sealing means against the electric line after bending upon the electric line entering through the hole.

2. An electrical installation accessory as claimed in claim 1, wherein the first set of projections is configured to bend upon engaging to the electric line upon the electric line entering through the hole.

3. An electrical installation accessory as claimed in claim 1 or 2, wherein the second set of projections is configured to engage to the electric line upon the electric line entering through the hole in the first direction and after engaging to resist the movement of the electric line in the second direction opposite to the first direction.

4. An electrical installation accessory as claimed in claim 1, 2 or 3, wherein the first set of projections and/or the second set of projections is integral with the body part.

5. An electrical installation accessory as claimed in any one of claims 1 to 4, wherein at least one projection of the first set of projections and/or at least one projection of the second set of projections has a claw-like shape.

6. An electrical installation accessory as claimed in any one of claims 1 to 5, wherein the sealing means comprise at least one membrane.

7. An electrical installation accessory as claimed in claim 6, wherein the at least one membrane is connected to the first set of projections and/or to the second set of projections.

8. An electrical installation accessory as claimed in claim 7, wherein the at least one membrane at least partially surrounds the first set of projections and/or the second set of projections.

9. An electrical installation accessory as claimed in claim 6, 7, or 8, wherein the at least one membrane is configured to be penetrated by the electric line upon the electric line entering through the hole and to engage the penetrating electric line in a sealing manner.

10. An electrical installation accessory as claimed in any one of claims 6 to 9, wherein the at least one membrane is made of a resilient material.

11. An electrical installation accessory as claimed in any one of claims 1 to 10, wherein electrical installation accessory comprises an electrical box.

12. An electrical installation accessory as claimed in claim 11, wherein the body part comprises at least a wall part of the electrical box.

13. An electrical installation accessory as claimed in claim 11 or 12, wherein the electrical box is a mounting box, an outlet box, a junction box and/or a tapping box.

14. An electrical installation accessory as claimed in any one of claims 1 to 10, wherein the body part is tubular.

15. An electrical installation accessory as claimed in claim 14, wherein the body part is configured to be connected to an electrical installation pipe connector of a predetermined size.
